(19) Europäisches Patentamt European Patent Office Office européen des brevets

(11) EP 4 768 522 A1

(12) EUROPEAN PATENT APPLICATION

(43) Date of publication:
01.07.2026 Bulletin 2026/27

(21) Application number: 25171439.0

(22) Date of filing: 17.04.2025

(51) International Patent Classification (IPC):
C08J 3/075 (2006.01)     C08J 3/12 (2006.01)
C08J 3/24 (2006.01)     A61L 15/60 (2006.01)

(52) Cooperative Patent Classification (CPC):
C08J 3/12; C08J 3/075; C08J 3/24; C08J 3/245;
C08J 2333/08; C08J 2333/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.12.2024 TW 113151451

(71) Applicant: Formosa Plastics Corporation
Kaohsiung City (TW)

(72) Inventors:
• LEE, Cheng-Lin
  Kaohsiung City (TW)
• LIN, Ya-Chi
  Kaohsiung City (TW)

(74) Representative: Lang, Christian
LangPatent Anwaltskanzlei IP Law Firm
Ingolstädter Straße 5
80807 München (DE)

(54) **SUPERABSORBENT POLYMER AND METHOD OF FORMING THE SAME**

(57) A superabsorbent polymer and a method of forming the same are provided. The method includes performing a free radical polymerization reaction to a superabsorbent polymer component to obtain a colloid gel. The colloid gel is sheared by using a pulverizer to obtain superabsorbent polymer particles. A blade and a perforated plate are disposed at an outlet of the pulverizer, in which a section of the blade is a parallelogram, and the perforated plate has several holes. The method further includes performing a surface crosslinking reaction to the superabsorbent polymer particles to obtain the superabsorbent polymer. Therefore, a surface porosity, an absorption rate and a liquid conductivity of the obtained superabsorbent polymer can be increased.

100

perform a free radical polymerization reaction to a superabsorbent polymer composition to obtain a colloid gel

shear the colloid gel by using a pulverizer to obtain superabsorbent polymer particles

perform a surface crosslinking reaction to the superabsorbent polymer particles to obtain the superabsorbent polymer

Fig. 1

EP 4 768 522 A1

## Description

### BACKGROUND

Field of Invention

The present invention relates to a superabsorbent polymer and a method of forming the same. More particularly, the present invention relates to a superabsorbent polymer produced by using a pulverizer having a special blade and a method of forming the same.

Description of Related Art

Superabsorbent polymer (SAP) is one kind of polymers without water solubility, and is widely used in various fields, such as absorbent products of diapers and sanitary napkin, water retaining agent for agricultural or horticultural uses, and industrial water-stopping agents.

Large quantities of monomers and hydrophilic polymers are needed in a fabrication process of the superabsorbent polymer, and a production of polyarylic acid (salt)-based superabsorbent polymers by using acrylic acid and /or its salts is majority in industry. With high performance of the diapers, which is the main application, there's demand for the superabsorbent polymers with more functions (such as high price-performance ratio). Specifically, in addition to basic physical properties such as absorption without pressure and absorption against pressure, various physical properties such as gel strength, water soluble component, moisture content, water absorbing rate, anti-bacterial property, wear resistance, powder flowability, deodorizing property, color resistance, low dust and low residual monomer are required for the superabsorbent polymers. Especially, as hygeined products such as the diapers become thinner, it is further desirable to elevate the absorption rate of the superabsorbent polymers.

Typically, the industrial fabrication method of the superabsorbent polymers powders or granules includes following processes: a polymerization process; a gel shearing (grain refinement) process after or during the polymerization process; a drying process for the grain-refined gel; a shearing process for the dried particles; a screening (grading) process for the sheared particles; and a surface crosslinking process for the superabsorbent polymer particles after screening. In recent fabrication methods of superabsorbent polymers, there's a method simultaneously performing the polymerization process and the gel shearing process by using a polymerization device with a pulverizer. In the aforementioned method, obtained hydrogel is sheared during the polymerization reaction of liquid monomers, and the grain-refined hydrogel is discharged from the polymerization device. Specifically, it is conventional to apply an intermittent kneader or a continuous kneader to shear the hydrogel.

However, dimensions of the gel particles obtained by the above device are about a few millimeters to a few centimeters. Under requirement for increasing absorption rate of the superabsorbent polymers, the aforementioned dimensions of gel particles cannot satisfy the requirement; thus, a gel pulverizer is further required. For example, the intermittent kneader or the continuous kneader can be used in a wet pulverization method to fabricate the superabsorbent particles with specific particle size or the smaller gel particles. Nevertheless, the size of the conventional gel pulverizer is too big to apply it in the industrial process.

Accordingly, there is an urgent need to provide a superabsorbent polymer and a method of forming the same to pulverize the gel to have size that fits the requirement during the fabrication process.

### SUMMARY

An aspect of the present invention provides a method of forming a superabsorbent polymer, which increases absorption rate and liquid conductivity of the superabsorbent polymer by using a pulverizer having a special blade to shear colloid gels.

Another aspect of the present invention provides a superabsorbent polymer, which is produced by the method of the above aspect.

According to the aspect of the present invention, the method of forming the superabsorbent polymer is provided. The method includes performing a free radical polymerization reaction to a superabsorbent polymer composition, so as to obtain a colloid gel, in which the superabsorbent polymer composition includes an unsaturated monomer aqueous solution, a polymerization initiator, and a free radical polymerization crosslinking agent; shearing the colloid gel by using a pulverizer to obtain plural superabsorbent polymer particles, in which a blade and a perforated plate are disposed at an outlet of the pulverizer, a section of the blade is a parallelogram, and the perforated plate has plural holes; and performing a surface crosslinking reaction to the superabsorbent polymer particles, a surface crosslinking agent and a reaction polymer, so as to obtain the superabsorbent polymer.

According to an embodiment of the present invention, the parallelogram has a first side length and a second side length parallel to the first side length in a first direction, the first side length and the second side length have a first end point and a second end point, respectively, at the same side, the first side length is sum of a first length and a second length, the first length is a distance between the first end point of the first side length and the second end point of the second side length in the first direction, and a ratio of the first length and the second length is in a range from 0.1 to 0.8.

According to an embodiment of the present invention, the parallelogram has an adjacent side intersecting the first side length at the first end point, an angle is between the first side length and the adjacent side, and a tangent value of the angle is in range between 0.1 and 0.9.

According to an embodiment of the present invention, the first length is in a range from 40 mm to 120 mm, and the second length is in a range from 190 mm to 210 mm.

According to an embodiment of the present invention, each of the holes has a diameter in a range from 8 mm to 22 mm.

According to an embodiment of the present invention, a spacing between the blade and the perforated plate is in a range from 0.01 mm to 0.09 mm.

According to an embodiment of the present invention, the pulverizer has a specific mechanical energy in a range from 25 kWh/t to 65 kWh/t.

According to an embodiment of the present invention, the method further includes adding a surface crosslinking agent and an aluminum salt to the superabsorbent polymer particles before performing the surface crosslinking reaction.

According to an embodiment of the present invention, based on an amount of the superabsorbent polymer particles as 100 wt%, an amount of the aluminum salt is 0.1 wt% to 1.0 wt%.

According to an embodiment of the present invention, the aluminum salt includes aluminum sulfate, aluminum lactate, aluminum citrate and combinations thereof.

According to an embodiment of the present invention, the superabsorbent polymer has an urine permeability measurement value in a range of $20 \times 10^{-7}$ $cm^3$-s/g to $50 \times 10^{-7}$ $cm^3$-s/g.

According to an embodiment of the present invention, the superabsorbent polymer has a EFFC value in a range of 27.6 g/g to 28.5 g/g.

According to an embodiment of the present invention, the superabsorbent polymer has a fixed height absorption value in a range of 20 g/g to 30 g/g.

According to an embodiment of the present invention, the superabsorbent polymer has free swell gel bed permeability in a range of $5 \times 10^{-9}$ $cm^2$ to $20 \times 10^{-9}$ $cm^2$.

According to another aspect of the present invention, the superabsorbent polymer is produced by the above method.

According to the aspect of the present invention, providing the method of forming the superabsorbent polymer. The method includes performing a free radical polymerization reaction to a superabsorbent polymer composition, so as to obtain a colloid gel, in which the superabsorbent polymer composition includes an unsaturated monomer aqueous solution, a polymerization initiator, and a free radical polymerization crosslinking agent; shearing the colloid gel by using a pulverizer to obtain plural superabsorbent polymer particles, in which a blade and a perforated plate are disposed at an outlet of the pulverizer, a spacing between the blade and the perforated plate is in a range from 0.01 mm to 0.09 mm, and the perforated plate has a plurality of holes with a diameter of 8 mm to 22 mm; and performing a surface crosslinking reaction to the superabsorbent polymer particles and a surface crosslinking agent, so as to obtain the superabsorbent polymer.

According to an embodiment of the present invention, a section of the blade is a parallelogram, the parallelogram has a first side length and a second side length parallel to the first side length along a first direction, the first side length and the second side length have a first end point and a second end point, respectively, at the same side, the first side length is divided into a first length portion and a second length portion, the first length portion is defined as horizontal distance between the first end point and the second end point in the first direction, and a ratio of the first length portion and the second length portion is in a range from 0.1 to 0.8.

According to an embodiment of the present invention, the parallelogram has an adjacent side intersecting the first side length at the first end point, an angle is between the first side length and the adjacent side, and a tangent value of the angle is in range between 0.1 and 0.9.

According to an embodiment of the present invention, the first length portion is in a range from 40 mm to 120 mm, and the second length portion is in a range from 190 mm to 210 mm.

According to an embodiment of the present invention, the method further includes adding an aluminum salt to the superabsorbent polymer particles before performing the surface crosslinking reaction.

With the application of the superabsorbent polymers and the method of forming the same of the present invention, compactness and surface roughness of the colloid gel can be increased by shearing the colloid gel by using the pulverizer having the special blade. Furthermore, the surface porosity, the absorption rate and the liquid conductivity of the obtained superabsorbent polymer can be increased, and the water extractable content can be decreased.

## BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features can be arbitrarily increased or reduced for clarity of discussion.

Fig. 1 illustrates a flow chart of a method of forming a superabsorbent polymer according to some embodiments of the present invention.

Fig. 2A illustrates a top view of a blade of a perforated plate according to some embodiments of the present invention.

Fig. 2B illustrates a side view of a blade of a perforated plate according to some embodiments of the present invention.

Fig. 2C illustrates a sectional view of a blade of a perforated plate according to some embodiments of the present invention.

## DETAILED DESCRIPTION

The conventional method of forming the superabsorbent polymer shears the crosslinking hydrogel, and drying and grinding are then performed, thereby increasing drying efficiency. The aforementioned shearing step can be, for example, shearing the hydrogel by using a screw extruder or a meat grinder after polymerization reaction, or crushing by using a cutter of the kneader while polymerization reaction, or cutting the hydrogel by using a scissor or an utility knife in the lab, or shredding by pressing the round cutting blade against a roller.

As described above, the present invention provides the superabsorbent polymer and the method of forming the same, compactness and surface roughness of the colloid gel can be increased by shearing the colloid gel by using the pulverizer having the special blade. Furthermore, the surface porosity, the absorption rate and the liquid conductivity of the obtained superabsorbent polymer can be increased, and the water extractable content can be decreased.

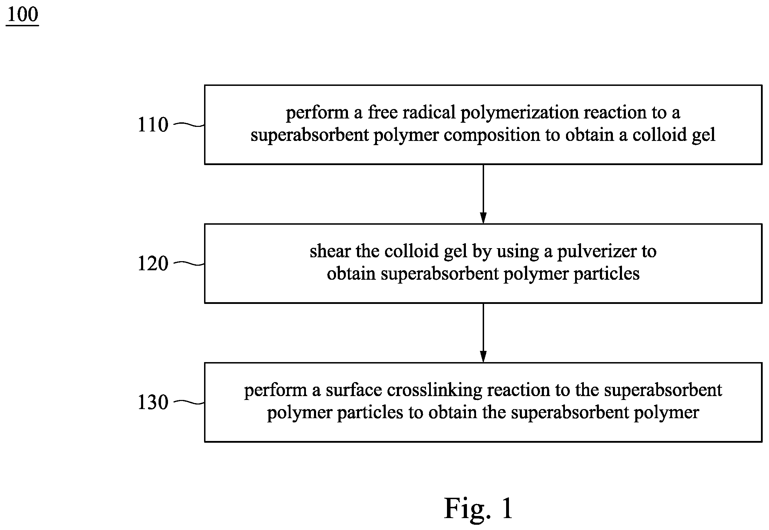

Referring to Fig. 1, Fig. 1 illustrates a flow chart of the method 100 of forming the superabsorbent polymer according to some embodiments of the present invention. First, operation 110 is performed to perform a free radical polymerization reaction to a superabsorbent polymer composition, so as to obtain a colloid gel. In some embodiments, the superabsorbent polymer composition includes an unsaturated monomer aqueous solution, a polymerization initiator, and a free radical polymerization crosslinking agent.

The "unsaturated monomer" refers to water-soluble monomer having unsaturated double bonds. In some embodiments, the unsaturated monomer aqueous solution of the superabsorbent polymer compositions includes the water-soluble monomers having acid group, such as acrylic acid. In some embodiments, the unsaturated monomer aqueous solution can be methacrylic acid, 2-acrylamido-2-methylpropanesulfonic acid, maleic acid (cis-butenedioic acid), maleic anhydride, fumaric acid (trans-butenedioic acid), and fumaric acid anhydride. The unsaturated monomer aqueous solution can include but not limited to one kind of monomer, but can also choose two or more kinds of the aforementioned monomer aqueous solutions.

In some embodiments, based on an amount of the superabsorbent polymer compositions, a concentration of the unsaturated monomer aqueous solution can be, but not limited to, 20 wt% to 55 wt%, and preferably 30 wt% to 45 wt%. Generally, if the concentration of the unsaturated monomer aqueous solution is 20 wt% to 55 wt%, products after polymerization can have suitable viscosity; and thus it's easier to perform machining, and reaction heat of the free radical polymerization reaction is more controllable.

In some alternative embodiments, other hydrophilic monomers with unsaturated double bonds can be optionally added, such as acrylamide, methacrylamide, 2-carboxyethyl acrylate, 2-carboxyethyl methacrylate, methyl acrylate, ethyl acrylate, dimethylamino acrylamide, and acrylamidopropyltrimonium chloride. However, an adding amount of the hydrophilic monomer is based on a principle of not destroying physical properties (such as centrifuge retention capacity and the absorption rate) of the superabsorbent polymer.

In some embodiments, water-soluble polymers are also optionally added in the superabsorbent polymer composition to reduce processing cost. The water-soluble polymer includes partially saponified or fully saponified polyvinyl alcohol, polyethylene glycol, polyacrylic acid, polyacrylamide, starch or starch derivatives, such as methyl cellulose, acrylate methyl cellulose, ethyl cellulose, and etc., and preferably, the starch and partially saponified or fully saponified polyvinyl alcohols is used individually or are used after mixing. In these embodiments, molecular weight of the water-soluble polymers is not limited. Based on the amount of the unsaturated monomer aqueous solution as 100 wt%, an adding amount of the water-soluble polymer is on a principle that physical properties of the superabsorbent polymer are not decreased, and generally the adding amount is not greater than 20 wt%, preferably not greater than 10 wt%, and more preferably not greater than 5 wt%.

In some embodiments, the unsaturated monomer aqueous solution can be directly subjected to the polymerization reaction; or can be partially neutralized with a neutralizing agent to become a neutral solution or a weak acidic solution first and then subjected to the polymerization reaction. In these embodiments, the neutralizing agent includes hydroxides or carbonates of alkali metal or alkaline earth metal (e.g. sodium hydroxide, potassium hydroxide, sodium carbonate, potassium carbonate, sodium bicarbonate and potassium bicarbonate), amino compounds or combinations thereof. In some embodiments, a neutralizing concentration of the unsaturated monomer aqueous solution is 45 mol% to 85 mol%, and preferably 50 mol% to 75 mol%. When the neutralizing concentration is within the aforementioned range, the unsaturated monomer aqueous solution can have a suitable pH value, and cannot cause damage once contacting with human body carelessly. It is noted that the neutralizing concentration herein is defined as a ratio of a mole number of the alkaline solution to a mole number of the unsaturated monomer aqueous solution, or it can also be defined as a percentage of acid group of the unsaturated monomer aqueous solution being neutralized. In some embodiments, the pH value of the unsaturated monomer aqueous solution is in a range from 5.5 to 7.0, and preferably from 5.5 to 6.5. If the pH value of the unsaturated monomer aqueous solution is within the range from 5.5 to 7.0, there is less unreacted monomer residues remaining in the solution after polymerization, and the obtained superabsorbent polymers can have better physical properties and greater absorption capacity.

Pre-polymerization reaction begins with decomposition of the polymerization initiator to generate free radicals. In some embodiments, based on an amount of the unsaturated monomer aqueous solution as 100 wt%, a suitable amount of the polymerization initiator is 0.001 wt% to 10 wt%, and preferably 0.1 wt% to 5 wt%. If the amount of the polymerization initiator is within the aforementioned range, a reaction rate of the free radical polymerization reaction is suitable, economic efficiency of the reaction is better, the reaction heat is more controllable, and it can avoid forming solid gel due to excessive polymerization.

In some embodiments, the polymerization initiator includes a thermal decomposition initiator, a redox initiator or combinations thereof. In some embodiments, the thermal decomposition initiator includes peroxide compounds (for example, hydrogen peroxide, di-t-butyl peroxide, peroxyamide or persulfate (including ammonium salt and alkali metal salt)) and azo compounds (for example, 2,2'-azobis(2-amidinopropane) dihydrochloride salt or 2,2'-azobis (N,N-dimethylene isobutylamidine) dihydrochloride salt). In some embodiments, the redox initiator includes bisulfite salt, ascorbic acid or ferrous salt. The polymerization initiators are better used by combining the thermal decomposition initiator and the redox initiator, in which the redox initiator generates free radicals, and when the free radicals transfer to the monomers, the polymerization reaction is induced, and thus great heat energy released from the polymerization reaction increases temperature. When it reaches specific temperature, the thermal decomposition initiator is further decomposed, such that the polymerization reaction can be more completed to avoid remaining excess unreacted monomers.

The free radical polymerization crosslinking agent in the superabsorbent polymer composition makes the superabsorbent polymer composition have suitable degree of crosslinking, thereby increasing processability of the superabsorbent polymer composition after the polymerization. In some embodiments, the free radical polymerization crosslinking agent can select compounds including two or more unsaturated double bonds, such as N,N-bis(2-propenyl) amine, N,N-methylene bisacrylamide, N,N-methylene bismethacrylamide, propylene acrylate, ethylene glycol diacrylate, poly(ethylene glycol) diacrylate, ethylene glycol dimethacrylate, polyethylene glycol dimethyl acrylate, glycerol triacrylate, glycerol trimethacrylate, glycerol added ethylene oxide triacrylate or trimethacrylate, trimethylolpropane trimethacrylate, trimethylolpropane triacrylate, N,N,N-tris(2-propenyl)amine, diacrylic acid ethylene glycol ester, polyoxyethylene triacrylate glycerol ester, diethylene polyoxyethylene glycerol triacrylate, dipropylene triethylene glycol ester, and etc. In some embodiments, the free radical polymerization crosslinking agent can select compounds having two or more epoxy groups, such as sorbitol polyglycidyl ether, polyglycerol polyglycidyl ether, ethylene glycol diglycidyl ether, diethylene glycol diglycidyl ether, polyethylene glycol diglycidyl ether, diglycerol polyglycidyl ether, and etc. The free radical polymerization crosslinking agent can be used individually, or more than two types of the free radical polymerization crosslinking agent are mixed to be used. In some embodiments, based on the amount of the unsaturated monomer aqueous solution as 100 wt%, an amount of the free radical polymerization crosslinking agent is 0.001 wt% to 5 wt%, and preferably 0.01 wt% to 3 wt%. If the amount of the free radical polymerization crosslinking agent is within the aforementioned range, viscosity of the polymer solution after reaction is suitable, and thus the polymer solution is easier to be machined. Therefore, the absorption capacity of the obtained superabsorbent polymer is better.

In some embodiments, the above free radical polymerization reaction can be performed in a batch reaction vessel or a conveyor reactor.

Subsequently, operation 120 is performed to shear the colloid gel by using a pulverizer, so as to obtain plural superabsorbent polymer particles. There are a special blade and a perforated plate disposed at an outlet of the pulverizer. The pulverizer having the special blade is used to extrude the colloid gel, thereby increasing roughness and compactness. Moreover, the superabsorbent polymer particles can have increasing absorption rate in short time, decreasing water extractable content, and increasing liquid conductivity.

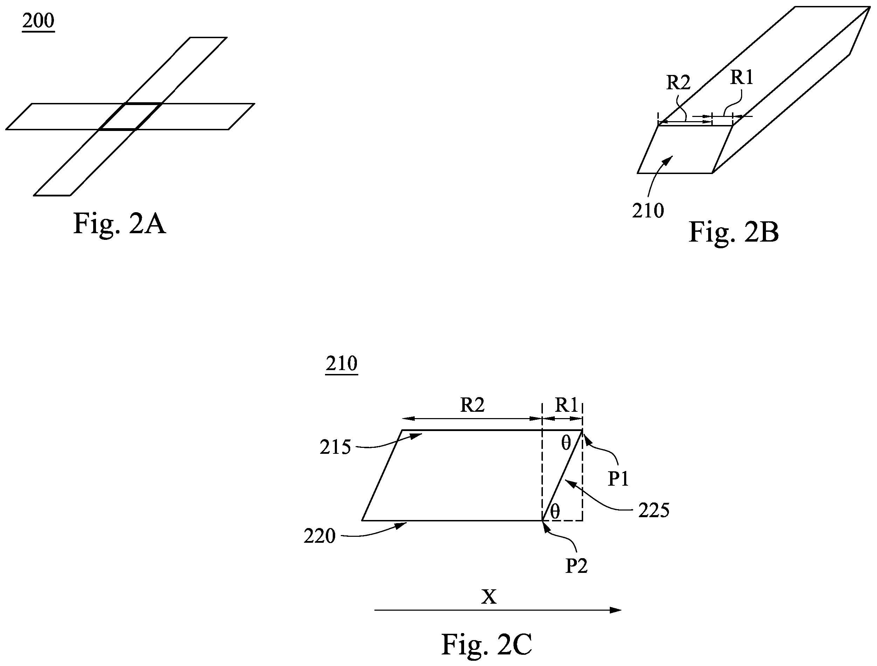

Referring to Figs. 2A-2C, Fig. 2A illustrates a top view of the blade 200 of the pulverizer according to some embodiments of the present invention; Fig. 2B illustrates a side view of the blade 200 of the pulverizer according to some embodiments of the present invention; and Fig. 2C illustrates a section 210 of the blade 200 of the pulverizer according to some embodiments of the present invention. In comparison to the conventional blade composed of rectangular cuboid, the blade 200 is composed of two blades in parallelogram; and unlike the conventional blade with rectangular section, the section 210 of the blade 200 of the present invention is parallelogram, as shown in Fig. 2B. When the section 210 is in shape of parallelogram, it has greater friction and extruding force while shearing the colloid gel, such that there is more friction between the colloid gel. Thus, the roughness and the compactness of the superabsorbent particles can be increased, and further increasing the bulk density and absorption rate of the superabsorbent particles.

The section 210 has a first side length 215 and a second side length 220 parallel to the first side length 215 in a direction X, in which an end point of the first side length 215 and the second side length 220 at the same side are a first end point P1 and a second end point P2, respectively. The first side length 215 is composed of a first length R1 and a second length R2, in which the first length R1 is a distance between the first end point P1 and the second end point P2 in the direction X. In some embodiments, the first length R1 in a range from about 40 mm to about 120 mm, and the second length R2 is in a range from about 190 mm to about 210 mm (preferably, about 200 mm).

In some embodiments, a ratio (R1/R2) of the first length R1 and the second length R2 is in a range from about 0.1 to about 0.8, and preferably from about 0.2 to about 0.7. When the ratio R1/R2 is between the aforementioned range, the pulverizer can have suitable extruding force and cutting force, and have better specific mechanical energy.

The section 210 has an adjacent side 225 intersecting the first side length 215 at the first end point P1, and an angle θ is between the first side length 215 and the adjacent side 225. In some embodiments, a tangent value of the angle θ (tanθ) is in range between about 0.1 and about 0.9, and preferably between about 0.2 and about 0.6. When tanθ is in the aforementioned range, the pulverizer can have suitable friction and cutting force, and have better specific mechanical energy.

The perforated plate of the pulverizer has several holes. In some embodiments, each of the holes has a diameter in a range from about 8 mm to about 22 mm, and preferably from about 10 mm to about 20 mm. When the diameter of the hole is in the aforementioned range, the operating time of the pulverizer can be decreased, and the pulverizer still has suitable friction force to the colloid gel.

The blade and the perforated plate are connected, and a spacing is between the blade and the perforated plate. In some embodiments, the spacing is in a range from about 0.01 mm to about 0.09 mm, and preferably from about 0.02 mm to about 0.08 mm. When the spacing is in the aforementioned range, the pulverizer can apply the suitable cutting force and friction force to the colloid gel and can have suitable specific mechanical energy, thereby effectively cutting the colloid gel and avoiding production of iron swarf from the blade or the perforated plate. It is noted that the specific mechanical energy is motor output power of the pulverizer divided by flux of the colloid gel. In some embodiments, the specific mechanical energy of the pulverizer is in a range from about 25 kWh/t to about 65 kWh/t, and preferably from about 25 kWh/t to about 60 kWh/t. The pulverizer with the aforementioned suitable specific mechanical energy can effectively shear the colloid gel.

In some embodiments, steps of drying, shearing and screening should be performed on the obtained small colloid gel after shearing by the pulverizer. In the aforementioned embodiments, temperature of the drying step is about 100°C to about 250°C. When the aforementioned temperature range is used to perform the drying step is used, drying time can be effectively controlled, and degree of crosslinking can be effectively controlled to avoid remaining great amount of unreacted monomers.

In some embodiments, the screening step is performed to filter the small colloid gel with the average particle size not greater than about 2.0 mm, and preferably about 0.05 mm to about 1.50 mm. The colloid gel with the average particle size greater than 2.0 mm should be returned to the pulverizer and be sheared again. The particle size should be controlled in the aforementioned range in order to avoid generating more fine powders in back-end process. Thus, the small colloid gel can have better thermal conductivity and avoid great amount of unreacted monomer residues. Generally, while the particle size distribution of the small colloid gel is narrower, the physical properties of the superabsorbent polymers are better, and the drying time and temperature can be effectively controlled.

In some embodiments, after the screening steps, the drying step is optionally performed on the small colloid gel again. In the aforementioned embodiments, the drying process is performed at temperature of about 100°C to about 180°C. The drying process performed in the aforementioned temperature range and can effectively control the degree of crosslinking to avoid great amount of unreacted monomer residues.

In some embodiments, the particle size of the superabsorbent polymer particles is screened to 0.06 mm to 1.00 mm, and preferably 0.10 mm to 0.85 mm. When the particle size of the superabsorbent polymer particles is controlled within the aforementioned range, amount of the fine particles of the product can be decreased, and the absorptivity of the superabsorbent polymer can be better.

In some embodiments, the obtained superabsorbent polymer particles have the centrifuge retention capacity of about 33.0 g/g to about 35.0 g/g, the clean water absorption rate for 1 minute of about 120 g/g to about 150 g/g, the water soluble component for 1 hour of about 5.0% to about 7.0%, the surface porosity of about 0.030 c.c./g to about 0.050 c.c./g, and the free swell rate of about 0.30 g/g/s to about 0.50 g/g/s.

Then, operation 130 is performed to perform a surface crosslinking reaction to the superabsorbent polymer particles, so as to obtain the superabsorbent polymer. Since the superabsorbent polymer is an insolvable hydrophilic polymer, whose interior has a uniform crosslinking structure; typically, crosslinking is further performed at a surface of the superabsorbent polymer to increase the absorption rate, strength of colloids, an anticaking property, the permeability for the liquid, and etc. The surface crosslinking reaction is performed with a surface crosslinking agent having functional groups, which can react with acid groups. In some embodiments, the surface crosslinking agent includes polyol, polyamine, a compound having two or more epoxy groups and alkylene carbonate. For example, the polyol can be glycerol, ethylene glycol, diethylene glycol, triethylene glycol, polyethylene glycol, propylene glycol; the polyamine can be ethylenediamine, diethylenediamine and triethylenediamine; the compound having at least two epoxy groups can be sorbitol polyglycidyl ether, polyglycerol polyglycidyl ether, ethylene glycol diglycidyl ether, diethylene glycol diglycidyl ether, diethylene glycol diglycidyl ether and diglycerol polyglycidyl ether; and the alkylene carbonate can be ethylene glycol carbonate, 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 1,3-dioxan-2-one, 4,6-dimethyl-1,3-dioxan-2-one and 1,3-dioxepan-2-one. The surface crosslinking agents can be used individually or combined two or more to perform the reaction. In addition, according to the selected surface crosslinking agent, it can be added directly, or it can be initially prepared as an aqueous solution or a hydrophilic organic solution and then added. The hydrophilic organic solvent includes, but not limit to methanol, ethanol, propanol, isobutanol, acetone, methyl ether, ethyl ether, and etc.

In some embodiments, based on the total solid amount of the reactant as 100 wt%, an adding amount of the surface crosslinking agent is about 0.001 wt% to about 10 wt%, and preferably about 0.005 wt% to about 5 wt%. When the adding amount of the surface crosslinking agent is within the aforementioned range, it subjects the surface of the superabsorbent polymer to have a crosslinking structure, and the absorptivity is further improved.

In some embodiments, the surface crosslinking reaction further includes adding an aluminum salt while adding the surface crosslinking agent, thereby further increasing liquid conductivity of the superabsorbent polymer. In some examples, the aluminum salt includes aluminum sulfate, aluminum lactate, aluminum citrate and combinations thereof. In some embodiments, based on the amount of the superabsorbent polymer particles as 100 wt%, an amount of the aluminum salt is 0.1 wt% to 1.0 wt%, preferably is 0.3 wt% to 0.7 wt%, and more preferably is about 0.6 wt%. The aforementioned amount range of the aluminum salt can increase the absorption against pressure and liquid conductivity of the superabsorbent polymers.

As discussed above, the superabsorbent polymers produced by implementing the method 100 of forming the superabsorbent polymer have greater absorption rate, lower water extractable content and greater surface porosity. In some embodiments, the superabsorbent polymers of the present invention has the water extractable content for 16 hours of about 5.0% to about 8.0%, and the surface porosity of about 0.030c.c./g to about 0.050 c.c./g.

Moreover, the superabsorbent polymers should have excellent centrifuge retention capacity (CRC) and absorption against pressure (AAP); thus, the superabsorbent polymers would not be broken or the ability of absorbing liquid of the superabsorbent polymers would not be affected due to external pressure exerted on the absorber after the superabsorbent polymer absorbs the liquid. In some embodiments, the centrifuge retention capacity of the superabsorbent polymers of the present invention is not less than 28 g/g, and preferably about 28.0 g/g to about 31.0 g/g. In some embodiments, the absorption against pressure of the superabsorbent polymers of the present invention is greater than 23 g/g, and preferably about 25 g/g to about 27 g/g. Effective Capacity (EFFC) of the superabsorbent polymers are average value of the CRC and the AAP, which can be calculated by the following formula:

$$\text{EFFC} = {CRC + AAP}/{2}$$

In some embodiments, the EFFC value of the superabsorbent polymers of the present invention is about 27.6 g/g to about 28.5 g/g.

Liquid absorption capacity of the dry superabsorbent polymers can be assessed by the time of initial fluid uptake of the dry superabsorbent polymers once contacting with the fluid and given as T20 value. A lower T20 value of the superabsorbent polymers means a shorter uptake time that the dry superabsorbent polymers can absorb liquid quickly. T20 value of the superabsorbent polymers of the present invention is not greater than about 150 seconds, such as about 90 seconds to about 130 seconds. It is noted that T20 value is defined as the time for 1 g superabsorbent polymers to absorb 20 g normal saline and 0.01 wt% alcohol ethoxylate compound solution under a pressure of 0.3 psi, in which the alcohol ethoxylate compound has 12 to 14 carbon atoms.

Permeability of the superabsorbent polymers can be assessed by using urine permeability measurement (UPM). The urine permeability measurement is generally used to measure resistance to flow of the pre-swelling layer of the superabsorbent polymers. Therefore, when the superabsorbent polymers have been wetted by the liquid, the superabsorbent polymers with great UPM shows greater permeability. The UPM value of the superabsorbent polymers of the present invention is about $20\times10^{-7}$ cm$^3$-s/g to about $50\times10^{-7}$ cm$^3$-s/g.

In addition, the liquid conductivity of the superabsorbent polymers can be assessed by fixed height absorption (FHA) and free swell gel bed permeability (free swell GBP). The FHA value measures amount of fluid absorbed by the superabsorbent polymers when the fluid is pulled against gravity over a specific height. In some embodiments, the FHA value of the superabsorbent polymers of the present invention is about 20 g/g to about 30 g/g. The free swell gel bed permeability is used to evaluate the permeability of expanded base of the superabsorbent polymers. It is understood that said "free swell" condition represents the increase in volume of the superabsorbent polymers are allowed to swell without a limiting load when absorbing the fluid. In some embodiments, the free swell gel bed permeability of the superabsorbent polymers produced by method 100 is about $5\times10^{-9}$ cm$^2$ to about $20\times10^{-9}$ cm$^2$.

Production of superabsorbent polymers

Preparation example

437.5 g of sodium hydroxide solution with a concentration of 48 wt% was slowly added into a 2000 c.c. Erlenmeyer flask containing 540 g of acrylic acid and 583.2 g of water, in which adding ratio of sodium hydroxide/acrylic acid was within a range of 0.85 to 0.95, adding time was 2 hours, and a temperature of neutral reaction system in the flask was kept within a range of 15°C to 40°C, thereby obtaining a monomer aqueous solution with monomer concentration of 42 parts by weight, in which 70 mol% acrylic acid was partially neutralized to sodium acrylate. The monomer aqueous solution was added into a tank reactor with 2L-volume (produced by CHIN LEI MECHANISM CO., LTD.).

Subsequently, 0.9 g of N,N'-methylene bisacrylamide (as free radical polymerization reaction crosslinking agent) was added into the unsaturated monomer aqueous solution, and the temperature was maintained at about 20°C. Nitrogen was injected through pipeline to perform deoxygenation for 30 minutes.

Afterwards, 0.3 g of hydrogen peroxide, 3.6 g of sodium bisulfite, 23.4 g of sodium carbonate foaming agent with a concentration of 10% and 3.6 g of ammonium persulfate were added as polymerization initiator to perform the free radical polymerization reaction. The colloid gel was obtained after standing still for 30 minutes.

Embodiment 1

The colloid gel of the preparation example was sheared by a pulverizer (CT-122 type produced by CHIAO TENG MACHINERY CO., LTD.), in which blade (produced by CHIN LEI MECHANISM CO., LTD.) and the perforated plate of the pulverizer had the following features: the first length R1 is 100 mm, the second length R2 is 200 mm, the ratio R1/R2 is 0.5, $\tan\theta$ is 0.330, the diameter of the hole of the perforated plate is 16 mm, the spacing between the blade and the perforated plate is 0.05 mm, and the specific mechanical energy (SME) is 25 kWh/t.

The colloid gel with a particle size of 2 mm and less was screened. Subsequently, a drying process was performed at the temperature of 130°C for 2 hours, and a sieve with a fixed particle size of 0.1 mm to 0.85 mm was used to filter, thus obtaining superabsorbent polymer particles.

Then, 100 g of the superabsorbent polymer particles were weighed and 5 g of an aqueous solution mixed with ethylene glycol, 1,4-butanediol (produced by Formosa Plastics Corporation) and methanol in a volume ratio of 1:1:0.5 as the surface crosslinking agent. In addition, the aluminum lactate aqueous solution in a concentration of 70 wt% was added with the amount of 0.6 wt% of the superabsorbent polymer particles. Then, the thermal treatment was performed at a temperature of 200°C for 1 hour. Thus, the superabsorbent polymer was obtained after cooling.

Embodiments 2 to 11

The superabsorbent polymers of embodiments 2 to 11 were produced by using the similar processing step as embodiment 1. The differences were the following features of the blade and the perforated plate of the pulverizer: the first length R1, the second length R2, the ratio R1/R2, $\tan\theta$, the diameter of the hole of the perforated plate is 16 mm, the spacing between the blade and the perforated plate, and the specific mechanical energy. The features of the blade and the perforated plate of the pulverizer of embodiments 2-11 are shown in Table 1.

Comparative example 1

According to methods of China patent CN 1206365A, 83.2 part of acrylic acid, 1662.8 parts of sodium acrylate with 37 wt%, 5.5 parts of poly(ethylene glycol) diacrylate (average moles of ethylene oxide was 8) and 654.5 parts deionized water were mixed to prepare a monomer solution. In the monomer solution, a neutralized ratio of the acrylic acid was 85%, and the monomer concentration was 30%. Nitrogen gas was blown into the monomer solution to remove dissolved oxygen in the monomer solution, while the temperature of the monomer solution was maintain at 24°C.

Subsequently, 77 parts of 2,2'-azobis(2-methylpropionamidine) dihydrochloride in 10 wt% was added, and the monomer solution was stirred simultaneously. After stirring for 3 minutes, the monomer solution including 2,2'-azobis(2-methylpropionamidine) dihydrochloride became white haze, and produced white solid particles with average particle size of about 9 μm. The solid particles were 2,2'-azobis(2-methylpropionamidine) diacrylates as the foaming agent. After stirring for 5 minutes, 10.8 parts of sodium persulfate solution in 10 wt% and 0.5 part of L-ascorbic acid solution in 1 wt% were added as the free radical polymerization initiator under nitrogen gas, while stirring the monomer solution. After fully stirring, the monomer solution was stood still. After adding the sodium persulfate solution in 10 wt% and L-ascorbic acid solution in 1 wt% for 3 minutes, the polymerization reaction was initiated. The polymerization was performed in a hot water bath, and the temperature of the hot water bath was controlled with increasing temperature of the monomer solution. After adding the sodium persulfate solution in 10 wt% into the monomer solution for 26 minutes, the temperature of the monomer solution reached 97°C. Then, the monomer solution was stood still for 20 minutes, and the temperature of the monomer solution was kept in a range between 70°C and 90°C, thereby performing the polymerization reaction of the acrylate monomer completely. Therefore, a crosslinking colloid gel polymer with bubble (or abbreviated as colloid gel (A) thereafter) was obtained as crosslinked porous polymer.

The obtained colloid gel (A) was continuously pulverized by a rotating disintegrator shown in China patent number CN 1206365A, which was herein incorporated by reference. During the pulverization, the average operation time or the pulverizing time for the colloid gel (A) in the rotating disintegrator was about 0.25 minute. The gel particles obtained through pulverizing the colloid gel (A) had a particles size in a range between about 1 mm to 15 mm. The pulverized gel particles were dried at 160°C by a rotary hot-air dryer for 1 hour. Subsequently, the dried gel particles were sheared by a roller mill, and were screened by a screener according to JIS standard. Thus, the particles passed through sieve pores with 850 μm but not through sieve pores with 150 μm were obtained as the superabsorbent polymer particles.

Then, a second crosslinking treatment agent was coated to perform the surface crosslinking reaction, thereby obtaining the superabsorbent polymer. Specifically, through mixing 100 parts of the superabsorbent polymer particles and the second crosslinking treatment agent, and heating the obtained mixture at 195°C for 30 minutes, the superabsorbent polymer was obtained. The second crosslinking treatment agent was formed by the following composition: mixing 0.05 part of ethylene glycol diglycidyl ether, 0.5 part of lactic acid, 0.02 part of polyoxyethylene sorbitan monostearate, 0.75 part of isopropanol and 3 parts of water.

Comparative example 2

According to the method of China patent CN 104936989A, an acrylic acid/ sodium acrylate solution in 42.7 wt% with a neutralized ratio of 69.0 mol% is prepared by mixing water, sodium hydroxide in 50 wt% and the acrylic acid. After mixing, a heat exchanger was used to cool down the monomer solution to a temperature of 30°C, and the monomer solution was degassed by nitrogen gas. The unsaturated crosslinking agent with multiple ethylene linkage used was 3-poly (oxy-1,2-ethanediyl), α, α', α'-1,2,3-propane triyltris[w-[(1-oxo-2-propenyl)oxy] (purity is about 85 wt%), in which the amount was 0.35 wt% based on the acrylic acid (boaa). In order to initiate the free radical polymerization reaction, the components with the content in the following were used: hydrogen peroxide with boaa 0.0008 wt%, which was added in an aqueous solution with 2.5 wt%; sodium persulfate with boaa 0.13 wt%, which was added in an aqueous solution with 15 wt%; and the ascorbic acid with boaa 0.0023 wt%, which was added in an aqueous solution with 0.5 wt%. The flux of the monomer solution was 800 kg/h.

The various components were continuously added into List ORP 250 Contikneter continuous kneader reactor (LIST AG · Arisdorf · Switzerland). Within the first third of the reactor, 26.3 kg/h of removable sieve base with fineness smaller than 150 μm was additionally added. The inlet temperature of the reaction solution was 30°C. The reaction mixture stayed in the reactor for about 15 minutes.

The obtained polymer gel was extruded by using SLRE 75R extruder (SelaMaschinen GmbH; Harbke, Germany). In the process of extruding, the temperature of the polymer gel was 95°C. The perforated plate had 12 holes with diameter of 8 mm. The thickness of the perforated plate was 16 mm. A ratio (L/D) of an internal length to an internal diameter of the extruder was 4. The specific mechanical energy (SME) of the extruder was 26 kWh/t. The extruded polymer gel was dispersed on a metal plate and within an air circulation drying chamber, and was dried for 90 minutes under 175°C. The metal plate had the polymer gel loading of 0.81 g/cm$^2$.

The dried polymer gel was ground by using a single stage rolling mill (grinding for 3 times: a gap width of the first grinding was 1000 μm, a gap width of the second grinding was 600 μm, and a gap width of the third grinding was 400 μm). The ground dried polymer gel was classified and mixed by the following composition of particle size distribution (PSD):

600 μm to 710 μm:10.6 wt%;

500 μm to 600 μm:27.9 wt %;

300 μm to 500 μm:42.7 wt %;

200μm to 300μm:13.8 wt %;and

150μm to 200μm:5.0 wt %.

Thus, the raw material polymer A (superabsorbent polymer particles) can be obtained.

Then, under 23°C and a rotational speed of 200 rpm, in a plow mixer with heated jackets (Gebr.Maschinenbau GmbH; Paderborn, Germany), 54.6 g of mixture was coated on 1.2 kg of the raw material polymer A by a dual substance nozzle, in which the mixture was 0.07 wt% of N-hydroxyethyl-2-oxazolidone, 0.07 wt% of 1,3-propane diol, 0.7 wt% of propane diol, 2.27 wt% of aluminum lactate in concentration of 22 wt%, 0.448 wt% of sorbitan monolaurate solution in concentration of 0.9 wt% and 0.991 wt% of isopropanol, and the aforementioned weight percent is based on the raw material A, respectively.

After coating, the product temperature was elevated to 185°C, and the product was remain under such temperature and the rotational speed of 50 rpm for 35 minutes. The obtained product was cooled to the ambient temperature, and was screened by a sieve of 710 μm. The performance anaylsis was performed on the superabsorbent polymer with the particle size smaller than 710 μm.

Comparative examples 3 to 10

The superabsorbent polymers of comparative examples 3 to 10 were produced by using the similar processing step as embodiment 1. The differences were the following features of the blade and the perforated plate of the pulverizer: the first length R1, the second length R2, the ratio R1/R2, tanθ, the diameter of the hole of the perforated plate is 16 mm, the spacing between the blade and the perforated plate, and the specific mechanical energy. The features of the blade and the perforated plate of the pulverizer of comparative examples 3 to 10 are shown in Table 1.

Evaluation method

In order to evaluate properties of the superabsorbent polymers of the present invention, the following test methods were used to analyze their physical properties. The evaluation was performed at room temperature (23±2°C) and relative air humidity of 45±10% unless otherwise specified. The superabsorbent polymers should be completely mixed before analyzing.

Centrifuge Retention Capacity

Centrifuge Retention Capacity (CRC) was measured in accordance with ERT 241.2(12) test method regulated by European Disposables and Nonwovens Association (EDANA). The Centrifuge Retention Capacity test results of the superabsorbent polymer particles and the superabsorbent polymers are shown in table 2 and table 3, respectively.

Clean water absorption rate for 1 minute

Clean water absorption rate for 1 minute was measured in accordance with ERT 240.2 (12) test method regulated by EDANA, in which the saline solution was replaced by deionized water (clean water), and absorption time was modified to 1 minute from 30 minutes. The clean water absorption rate for 1 minute test results of the superabsorbent polymer particles are shown in table 2.

Surface porosity

Surface porosity was measured by a mercury porosimeter (micromeritics AutoPore® IV 9520), in which a standard filling pressure was about 4 kPa. The surface porosity test results of the superabsorbent polymer particles and the superabsorbent polymers are shown in table 2 and table 3, respectively.

Free swell rate

Free swell rate (FSR , unit: g/g/s) was measured and calculated according to a method described in Patent WO 2012/174026A1. 4 g of the superabsorbent polymer was dried at temperature of 23±2°C and under a pressure not greater than 0.01 torr for 48 hours, and then about 1 g of the superabsorbent polymer was placed into a beaker and dispersed at bottom of the beaker. Subsequently, 20 g of sodium chloride solution with concentration of 0.9 wt% was poured in. Time required from the liquid once contacted with the superabsorbent polymers to be fully absorbed by the superabsorbent polymer was measured. The free swell rate was amount of the liquid divided by weight of the superabsorbent polymers, and divided by the time required. Average values of 3 repeated test results of the superabsorbent polymer particles and the superabsorbent polymers are shown in table 2 and table 3, respectively.

Absorption against pressure

Absorption against pressure (AAP) was measured in accordance with ERT 442.3(10) test method regulated by EDANA. The absorption against pressure of the superabsorbent polymers for 0.9% of sodium chloride solution was tested under pressure of 4.9 kPa for 60 minutes. The test results of the superabsorbent polymers are shown in table 3.

Effective Capacity (EFFC)

The EFFC value is the value obtained by sum of the CRC and the AAP divided by 2. The EFFC values of the superabsorbent polymers are shown in table 3.

Water extractable content for 1 hour and 16 hours

Water extractable content for 1 hour and 16 hours were measured in accordance with ERT 470.2 (02) test method regulated by EDANA. The water soluble component for 1 hour test results of the superabsorbent polymer particles and the water soluble component for 16 hours test results of the superabsorbent polymers are shown in table 2 and table 3, respectively.

T20 value

T20 value (unit: seconds) was measured and calculated according to a method described in U.S. Patent Publication No. 9,285,302. T20 value is defined as time of 1 g superabsorbent polymer required to absorb 20 g normal saline and 0.01 wt% alcohol ethoxylate compound solution, in which the alcohol ethoxylate compound has 12 to 14 carbon atoms. Average values of tests repeated three times of the superabsorbent polymers are shown in table 3.

Urine permeability measurement

Urine permeability measurement (UPM) was measured and calculated according to a method described in Patent WO 2012/174026A1. The test results of the superabsorbent polymers are shown in table 3.

Fixed height absorption

Fixed height absorption (FHA) was measured and calculated according to a method described in U.S. Patent Publication No. 7,108,916. The test results of the superabsorbent polymers are shown in table 3.

Free swell gel bed permeability

Free swell gel bed permeability was measured and calculated according to a method described in U.S. Patent Publication No. 8,021,998B2. The test results of the superabsorbent polymers are shown in table 3.

Table 1

| | R1(mm) | R2(mm) | R1/R2 | tanθ | diameter of perforated plate (mm) | spacing between blade perforated plate (mm) | SME (kWh/t) |
|---|---|---|---|---|---|---|---|
| Embodiment 1 | 100 | 200 | 0.5 | 0.33 | 16 | 0.05 | 25 |
| Embodiment 2 | 120 | 200 | 0.3 | 0.275 | 16 | 0.05 | 33 |
| Embodiment 3 | 50 | 200 | 0.25 | 0.66 | 16 | 0.05 | 42 |
| Embodiment 4 | 40 | 200 | 0.2 | 0.825 | 16 | 0.05 | 51 |
| Embodiment 5 | 50 | 200 | 0.25 | 0.66 | 10 | 0.05 | 57 |
| Embodiment 6 | 50 | 200 | 0.25 | 0.66 | 12 | 0.05 | 55 |

(continued)

|  | R1(mm) | R2(mm) | R1/R2 | tanθ | diameter of perforated plate (mm) | spacing between blade perforated plate (mm) | SME (kWh/t) |
|---|---|---|---|---|---|---|---|
| Embodiment 7 | 50 | 200 | 0.25 | 0.66 | 14 | 0.05 | 52 |
| Embodiment 8 | 50 | 200 | 0.25 | 0.66 | 18 | 0.05 | 50 |
| Embodiment 9 | 50 | 200 | 0.25 | 0.66 | 20 | 0.05 | 48 |
| Embodiment 10 | 50 | 200 | 0.25 | 0.66 | 16 | 0.02 | 55 |
| Embodiment 11 | 50 | 200 | 0.25 | 0.66 | 16 | 0.09 | 50 |
| Compartive example 1 | N/A | N/A | N/A | N/A | N/A | N/A | 30 |
| Compartive example 2 | N/A | N/A | N/A | N/A | N/A | N/A | 26 |
| Compartive example 3 | 20 | 200 | 0.1 | 1.65 | 16 | 0.05 | 58 |
| Compartive example 4 | 180 | 200 | 0.9 | 0.183 | 16 | 0.05 | 29 |
| Compartive example 5 | 50 | 200 | 0.25 | 0.66 | 16 | 0.01 | 66 |
| Compartive example 6 | 50 | 200 | 0.25 | 0.66 | 16 | 0.1 | 20 |
| Compartive example 7 | 50 | 200 | 0.25 | 0.66 | 6 | 0.1 | 58 |
| Compartive example 8 | 50 | 200 | 0.25 | 0.66 | 22 | 0.1 | 34 |
| Compartive example 9 | 100 | 100 | 1 | 0 | 16 | 0.05 | 30 |
| Compartive example 10 | 100 | 100 | 1 | 0 | 16 | 0.1 | 27 |

Table 2

|  | CRC (g/g) | Clean water absorption rate for 1 minute(g/g) | Water extractable content for 1 hour(%) | Surface porosity (c.c/g) | Free swell rate (g/g/s) |
|---|---|---|---|---|---|
| Embodiment 1 | 34.5 | 122 | 6.8 | 0.038 | 0.35 |
| Embodiment 2 | 34.0 | 125 | 6.6 | 0.039 | 0.36 |
| Embodiment 3 | 34.0 | 129 | 6.1 | 0.041 | 0.37 |
| Embodiment 4 | 33.7 | 130 | 5.9 | 0.042 | 0.39 |
| Embodiment 5 | 33.4 | 135 | 5.5 | 0.051 | 0.44 |
| Embodiment 6 | 33.6 | 137 | 5.4 | 0.046 | 0.42 |
| Embodiment 7 | 33.8 | 134 | 5.3 | 0.044 | 0.42 |
| Embodiment 8 | 34.0 | 133 | 5.2 | 0.043 | 0.41 |
| Embodiment 9 | 33.9 | 130 | 6.2 | 0.041 | 0.42 |
| Embodiment 10 | 33.5 | 136 | 5.6 | 0.043 | 0.45 |
| Embodiment 11 | 33.9 | 131 | 6.1 | 0.039 | 0.41 |
| Compartive example 1 | 45.5 | 98 | 8.2 | 0.025 | 0.22 |
| Compartive example 2 | 34.4 | 70 | 9.8 | 0.022 | 0.38 |
| Compartive example 3 | 34.1 | 126 | 6.8 | 0.037 | 0.35 |
| Compartive example 4 | 34.6 | 120 | 6.9 | 0.031 | 0.35 |
| Compartive example 5 | 33.0 | 145 | 5.2 | 0.038 | 0.49 |
| Compartive example 6 | 34.7 | 120 | 6.9 | 0.032 | 0.34 |

(continued)

|  | CRC (g/g) | Clean water absorption rate for 1 minute(g/g) | Water extractable content for 1 hour(%) | Surface porosity (c.c/g) | Free swell rate (g/g/s) |
|---|---|---|---|---|---|
| Compartive example 7 | 33.2 | 140 | 5.4 | 0.046 | 0.47 |
| Compartive example 8 | 34.1 | 124 | 6.6 | 0.034 | 0.36 |
| Compartive example 9 | 32.0 | 70 | 10.6 | 0.019 | 0.25 |
| Compartive example 10 | 32.3 | 72 | 12.7 | 0.017 | 0.21 |

Table 3

|  | CRC (g/g) | AAP (g/g) | EFFC (g/g) | Surface porosity (c.c/g) | UPM ($\times 10^{-7}$ cm$^3$s/g) | T20 (秒) | FSR (g/g/s) | Water extractable content for 16 hours (%) | FHA (g/g) | Free swell GBP ($\times 10^{-9}$ cm$^2$) |
|---|---|---|---|---|---|---|---|---|---|---|
| Embodiment 1 | 30.1 | 26.1 | 28.1 | 0.037 | 35 | 125 | 0.34 | 6.2 | 25.1 | 10.6 |
| Embodiment 2 | 30.0 | 26.0 | 28.0 | 0.038 | 34 | 110 | 0.35 | 6.1 | 25.0 | 12.3 |
| Embodiment 3 | 29.4 | 26.3 | 27.9 | 0.040 | 42 | 95 | 0.34 | 6.0 | 24.9 | 13.2 |
| Embodiment 4 | 29.8 | 26.2 | 28.0 | 0.042 | 38 | 100 | 0.37 | 5.7 | 24.8 | 14.3 |
| Embodiment 5 | 29.7 | 26.3 | 28.0 | 0.050 | 37 | 94 | 0.43 | 5.2 | 24.3 | 15.0 |
| Embodiment 6 | 29.5 | 26.5 | 28.0 | 0.045 | 38 | 98 | 0.41 | 5.3 | 24.1 | 13.9 |
| Embodiment 7 | 29.6 | 26.2 | 27.9 | 0.042 | 39 | 93 | 0.40 | *5.0* | 24.5 | 14.1 |
| Embodiment 8 | 29.7 | 26.4 | 28.1 | 0.042 | 37 | 96 | 0.40 | 5.1 | 24.0 | 13.8 |
| Embodiment 9 | 29.6 | 26.0 | 27.8 | 0.040 | 39 | 104 | 0.41 | 6.1 | 24.1 | 14.3 |
| Embodiment 10 | 29.6 | 26.7 | 28.2 | 0.042 | 40 | 109 | 0.43 | 5.4 | 24.3 | 12.9 |
| Embodiment 11 | 29.9 | 26.2 | 28.1 | 0.037 | 41 | 116 | 0.40 | 5.9 | 23.8 | 13.8 |
| Compartive example 1 | 40.0 | 14.7 | 27.4 | 0.025 | 2 | 350 | 0.21 | 8.5 | 2.6 | 1.8 |
| Compartive example 2 | 27.2 | 25.1 | 26.2 | 0.020 | 67 | 210 | 0.34 | 10.1 | 22.3 | 5.1 |
| Compartive example 3 | 29.9 | 25.1 | 27.5 | 0.036 | 30 | 122 | 0.34 | 6.1 | 23.4 | 8.9 |
| Compartive example 4 | 30.0 | 25.0 | 27.5 | 0.030 | 26 | 130 | 0.34 | 6.1 | 23.5 | 7.1 |
| Compartive example 5 | 28.8 | 25.0 | 26.9 | 0.037 | 22 | 132 | 0.46 | 5.1 | 23.1 | 10.1 |

(continued)

| | CRC (g/g) | AAP (g/g) | EFFC (g/g) | Surface porosity (c.c/g) | UPM ($\times 10^{-7}$ cm$^3$s/g) | T20 ( 秒 ) | FSR (g/g/s) | Water extractable content for 16 hours (%) | FHA (g/g) | Free swell GBP ($\times 10^{-9}$ cm$^2$) |
|---|---|---|---|---|---|---|---|---|---|---|
| Compartive example 6 | 28.5 | 25.1 | 26.8 | 0.031 | 25 | 138 | 0.33 | 6.6 | 23.6 | 6.2 |
| Compartive example 7 | 28.7 | 25.4 | 27.1 | 0.044 | 20 | 127 | 0.45 | 5.2 | 19.1 | 4.2 |
| Compartive example 8 | 29.2 | 25.0 | 27.1 | 0.031 | 22 | 137 | 0.35 | 6.3 | 23.0 | 6.1 |
| Compartive example 9 | 29.1 | 24.5 | 26.8 | 0.018 | 10 | 265 | 0.22 | 13.3 | 11.8 | 4.5 |
| Compartive example 10 | 28.7 | 24.7 | 26.7 | 0.016 | 8 | 270 | 0.20 | 15.1 | 11.2 | 3.3 |

According to table 2 and table 3, absorption properties of the superabsorbent polymers of comparative examples 1 and 2 obtained by using the conventional method are worse than those of embodiments 1-11, and the water extractable content of comparative examples 1 and 2 are obviously too high. Comparative example 2 had too great value of tanθ, and the ratio R1/R2 of comparative example 4 is too great, so both of them cannot form the superabsorbent polymers with better absorption properties. The spacing of the blade and the perforated plate of comparative examples 6-8 are too great, in which comparative example 7 had too small hole diameter, while comparative example 8 had too great hole diameter, such that the absorption properties of the obtained superabsorbent polymers were bad. Comparative examples 9 and 10 had the first length R1 equal to the second length R2, so the friction force was not enough, thereby resulting the less surface porosity and high water extractable content for the superabsorbent polymer particles and the superabsorbent polymer, and the absorption properties were also bad.

According to table 2, compared to comparative examples 1 to 10, the superabsorbent polymer particles of embodiments 1 to 11 had less water extractable contents and higher clean water absorption rate for 1 minute, surface porosity and free swell rate.

According to table 3, compared to comparative examples 1 to 10, the superabsorbent polymer particles of embodiments 1 to 11 had greater surface porosity, EFFC value, UPM, FHA and free swell GBP, and had lower T20 value and water extractable contents. Therefore, the superabsorbent polymers of embodiments 1 to 11 could absorb liquid in an easier manner under dried condition, and permeability and conductivity for liquid were also better.

Therefore, with the superabsorbent polymer and the method of forming the same of the present invention, compactness and surface roughness of the colloid gel can be increased by shearing the colloid gel by using the pulverizer having the special blade. Furthermore, the surface porosity, the absorption rate and the liquid conductivity of the obtained superabsorbent polymer can be increased, and the water extractable content can be decreased.

## Claims

1.    A method of forming a superabsorbent polymer, comprising:

performing a free radical polymerization reaction to a superabsorbent polymer composition, so as to obtain a colloid gel, wherein the superabsorbent polymer composition comprises an unsaturated monomer aqueous solution, a polymerization initiator, and a free radical polymerization crosslinking agent;
shearing the colloid gel by using a pulverizer to obtain a plurality of superabsorbent polymer particles, wherein a blade and a perforated plate are disposed at an outlet of the pulverizer, a section of the blade is a parallelogram, and the perforated plate has a plurality of holes; and
performing a surface crosslinking reaction to the superabsorbent polymer particles, so as to obtain the superabsorbent polymer.

2.    The method of claim 1, wherein the parallelogram has a first side length and a second side length parallel to the first side length in a first direction, the first side length and the second side length have a first end point and a second end point, respectively, at the same side, the first side length is sum of a first length and a second length, the first length is a distance between the first end point of the first side length and the second end point of the second side length in the first direction, and a ratio of the first length and the second length is in a range from 0.1 to 0.8.

3. The method of any one of claim 2, wherein the parallelogram has an adjacent side intersecting the first side length at the first end point, an angle is between the first side length and the adjacent side, and a tangent value of the angle is in range between 0.1 and 0.9.

4. The method of any one of claims 2-3, wherein the first length is in a range from 40 mm to 120 mm, and the second length is in a range from 190 mm to 210 mm.

5. The method of any one of claims 1-4, wherein each of the holes has a diameter in a range from 8 mm to 22 mm.

6. The method of any one of claims 1-5, wherein a spacing between the blade and the perforated plate is in a range from 0.01 mm to 0.09 mm.

7. The method of any one of claims 1-6, wherein the pulverizer has a specific mechanical energy in a range from 25 kWh/t to 65 kWh/t.

8. The method of any one of claims 1-7, further comprising:
adding a surface crosslinking agent and an aluminum salt to the superabsorbent polymer particles before performing the surface crosslinking reaction.

9. The method of claim 8, wherein based on an amount of the superabsorbent polymer particles as 100 wt%, an amount of the aluminum salt is 0.1 wt% to 1.0 wt%.

10. The method of any one of claims 8-9, wherein the aluminum salt comprises aluminum sulfate, aluminum lactate, aluminum citrate and combinations thereof.

11. The method of any one of claims 1-10, wherein the superabsorbent polymer has an urine permeability measurement value in a range of $20 \times 10^{-7}$ $cm^3$-s/g to $50 \times 10^{-7}$ $cm^3$-s/g.

12. The method of any one of claims 1-11, wherein the superabsorbent polymer has a EFFC value in a range of 27.6 g/g to 28.5 g/g.

13. The method of any one of claims 1-12, wherein the superabsorbent polymer has a fixed height absorption value in a range of 20 g/g to 30 g/g.

14. The method of any one of claims 1-13, wherein the superabsorbent polymer has free swell gel bed permeability in a range of $5 \times 10^{-9}$ $cm^2$ to $20 \times 10^{-9}$ $cm^2$.

15. A superabsorbent polymer, produced by the method of any one of claims 1-14.

EP 4 768 522 A1

100

```
110 ─┐  ┌─────────────────────────────────────────────────┐
       │  perform a free radical polymerization reaction to a  │
       │  superabsorbent polymer composition to obtain a colloid gel  │
       └─────────────────────────────────────────────────┘
                            │
                            ▼
120 ─┐  ┌─────────────────────────────────────────────────┐
       │  shear the colloid gel by using a pulverizer to    │
       │  obtain superabsorbent polymer particles           │
       └─────────────────────────────────────────────────┘
                            │
                            ▼
130 ─┐  ┌─────────────────────────────────────────────────┐
       │  perform a surface crosslinking reaction to the superabsorbent  │
       │  polymer particles to obtain the superabsorbent polymer  │
       └─────────────────────────────────────────────────┘
```

Fig. 1

EP 4 768 522 A1

200

Fig. 2A

R2   R1

210

Fig. 2B

210

R2   R1

215

θ

P1

225

220

θ

P2

X

Fig. 2C

Europäisches
Patentamt
European
Patent Office
Office européen
des brevets

## EUROPEAN SEARCH REPORT

**Application Number**

EP 25 17 1439

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 12 024 577 B2 (LG CHEMICAL LTD [KR]) 2 July 2024 (2024-07-02) * column 20, line 30 - column 21, line 28; claims; examples * ----- | 1-15 | INV. C08J3/075 C08J3/12 C08J3/24 A61L15/60 |
| A | EP 3 093 298 A1 (HANWHA CHEMICAL CORP [KR]) 16 November 2016 (2016-11-16) * paragraph [0035] * ----- | 1-15 | |
| A | EP 3 312 218 A1 (NIPPON CATALYTIC CHEM IND [JP]) 25 April 2018 (2018-04-25) * paragraphs [0096] - [0115] * ----- | 1-15 | |
| A | CN 205 201 858 U (SHANGHAI YUCHENG POLYMER MAT CO LTD) 4 May 2016 (2016-05-04) * Passage relating to the drawings; claims; figures * ----- | 1-15 | |

**TECHNICAL FIELDS
SEARCHED (IPC)**

C08J

The present search report has been drawn up for all claims

| Place of search | Date of completion of the search | Examiner |
|---|---|---|
| Munich | 21 September 2025 | Frison, Céline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  ......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 1439

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2025

| Patent document cited in search report | | Publication date | Patent family member(s) | | Publication date |
|---|---|---|---|---|---|
| US 12024577 | B2 | 02-07-2024 | EP | 3943541 A1 | 26-01-2022 |
| | | | JP | 7297371 B2 | 26-06-2023 |
| | | | JP | 2022531945 A | 12-07-2022 |
| | | | US | 2022242990 A1 | 04-08-2022 |
| | | | WO | 2021150095 A1 | 29-07-2021 |
| EP 3093298 | A1 | 16-11-2016 | EP | 3093298 A1 | 16-11-2016 |
| | | | JP | 2017501295 A | 12-01-2017 |
| | | | KR | 20150082123 A | 15-07-2015 |
| | | | TW | 201533077 A | 01-09-2015 |
| | | | US | 2016332143 A1 | 17-11-2016 |
| EP 3312218 | A1 | 25-04-2018 | CN | 107709415 A | 16-02-2018 |
| | | | CN | 118005960 A | 10-05-2024 |
| | | | CN | 118005961 A | 10-05-2024 |
| | | | EP | 3312218 A1 | 25-04-2018 |
| | | | JP | 6460495 B2 | 30-01-2019 |
| | | | JP | WO2016204302 A1 | 15-02-2018 |
| | | | KR | 20180019558 A | 26-02-2018 |
| | | | US | 2018298132 A1 | 18-10-2018 |
| | | | US | 2023097487 A1 | 30-03-2023 |
| | | | WO | 2016204302 A1 | 22-12-2016 |
| CN 205201858 | U | 04-05-2016 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1206365 A
- CN 104936989 A
- WO 2012174026 A1

- US 9285302 B
- US 7108916 B
- US 8021998 B2